Europäisches Patentamt

European Patent Office

Office européen des brevets

(19)

(11) **EP 1 713 033 A2**

(12) **EUROPEAN PATENT APPLICATION**

(43) Date of publication:
**18.10.2006 Bulletin 2006/42**

(51) Int Cl.:
***G06T 11/00*** *(2006.01)*

(21) Application number: **06004157.1**

(22) Date of filing: **01.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.04.2005 KR 2005031557**

(71) Applicant: **Samsung Electronics Co., Ltd.**
**Suwon-si, Gyeonggi-Do (KR)**

(72) Inventor: **Oh, Young Seuk**
**Songpa-Gu**
**Seoul (KR)**

(74) Representative: **Grünecker, Kinkeldey,**
**Stockmair & Schwanhäusser**
**Anwaltssozietät**
**Maximilianstrasse 58**
**80538 München (DE)**

(54) **System and method for forming bitmap font outline**

(57) An AV system and a method of forming a bitmap font outline of the AV system are disclosed. The method of forming a bitmap font outline of an Audio/Video (AV) system includes: searching for a font corresponding to received text code data, and displaying the font on a background graphic image displayed on a display screen; examining whether color values of individual pixels contained in a predetermined area including the font are indicative of a font color value; and if the color value of the examined pixel is indicative of the font color value, converting a color value of a pixel, which is not contained in the font, from among peripheral pixels of an examined pixel into a predetermined outline color value, and displaying the converted result.

FIG. 1

**Description**

BACKGROUND OF THE INVENTION

1. Field of the Invention

An aspect of the present invention relates to an Audio/Video (AV) system and a method of forming a bitmap font outline of the AV system, and, more particularly, to an AV system and method of forming a bitmap font outline of the AV system capable of displaying a font outline using a minimum of font data.

2. Description of the Related Art

Generally, high-performance systems (e.g., a printer, a computer, and a monitor) use a vector font to display a character, but AV systems have a limitation in capacitance of a memory capable of storing font data therein, such that a monochromatic bitmap font to employ 1 bit per pixel is generally used. The bitmap font is indicative of a method of drawing the shape of a character or letter comprising the same-sized pixels. If the value of each pixel bit is 1 in a monochromatic bitmap font, a font color is inserted into a corresponding pixel. If the value of each pixel bit value is 0 in the monochromatic bitmap font, the corresponding pixel becomes transparent. As such, a font is displayed.

However, if the font color of the bitmap font is white, a font may be appear as a vague image if a background color does not sufficiently contrast with the font color. For example, an On Screen Display (OSD) character may be represented in the form of a white font where a background color is also almost white. Here, since the font is similar to the background color, the user may have difficulty in reading the font.

In recognition of the above-mentioned problems, Korean Utility Model Registration No. 1998-35081 teaches displaying an outline having a specific color different from that of the font at the outside of the font, such that a user may easily identify OSD characters. According to the Korean Utility Model Registration No. 1998-35081, data of a font ROM (Read Only Memory) is stored in a first buffer to form an outline having a specific color that is different from that of the font. The data stored in the first buffer is then shifted in four directions (i.e., right and left directions, and upper and lower directions), and the shifted result is stored in a second buffer. An outline font is formed using data of the first buffer and the data of the second buffer, and is stored in a third buffer. Thereafter, a specific part "1" of the first buffer is converted into a text color, a specific part "0" of the second buffer is converted into a back color, and a specific part "1" of the third buffer is converted into an outline color, such that the text color, the back color, and the outline color are sequentially stored in fourth to sixth buffers. Finally, if color values of the fourth to sixth buffers are ORed, and the ORed result is displayed on a display, the OSD character having an outline is displayed on the display.

However, in order to form the outline of the OSD character using the above-mentioned method, general font data must be changed, and data associated with the outline must be additionally stored, such that a large amount of storage space is required. As a result, a memory contained in individual manufactured products must be designed to have high storage capacitance, resulting in increased production costs of a corresponding product.

SUMMARY OF THE INVENTION

Therefore, an aspect of the invention provides an AV system and a method of forming a bitmap font outline of the AV system, which displays a font outline without changing general bitmap font data to other data.

Additional and/or other aspects and advantages of the invention will be set forth in part in the description which follows and, in part, will be obvious from the description, or may be learned by practice of the invention.

In accordance with an aspect of the invention, the above and/or other aspects may be achieved by the provision of an Audio/Video (AV) system comprising: a font display to analyze received text code data, to search for a font corresponding to the text code data, and to display the font on a background graphic image displayed on a display screen; a font image tracker to examine whether color values of individual pixels contained in a predetermined area including the font are indicative of a font color value; and a font outline display to convert a color value of a pixel, which is not found to be contained in the font but which is adjacent to a pixel found in the font, into a predetermined outline color value when the color value of the pixel not in the font is indicative of the font color value, and to display the converted result.

According to an aspect of the invention, the font image tracker virtually moves an outline display matrix including n x n pixels (where n = odd number of 3 and over) in the predetermined area, and at the same time examines a color value of a pixel that overlaps with a center pixel of the outline display matrix.

According to an aspect of the invention, the pixels adjacent to the examined pixel are indicative of pixels of the predetermined area that overlaps with the remaining pixels other than the center pixel from among pixels of the outline display matrix.

According to an aspect of the invention, the font outline display recognizes color values of the pixels of the predetermined area that overlaps with the remaining pixels, and converts a color value of a corresponding pixel into the outline color value when a pixel having no font color value is detected from among the pixels.

According to an aspect of the invention, the font image tracker moves the outline display matrix when the color value of the examined pixel is not equal to the font color value, and examines the next pixel.

In accordance with another aspect of the present invention, there is provided an Audio/Video (AV) system comprising: a font display to analyze received text code data, tosearch for a font corresponding to the text code data, and to display the font on a background graphic image displayed on a display screen; a font image tracker to examine a color value of a pixel of the font and a color value of a pixel of a background graphic image, and to determine whether a pixel acting as an examined object constructs the font or the background graphic image; and a font outline display to convert a color value of the pixel, where the pixel is not found to be contained in the font but which is adjacent to a pixel found in the font, into a predetermined outline color value when the color value of the pixel not in the font is indicative of the font color value, and to display the converted result..

According to an aspect of the invention, the font image tracker virtually moves an outline display matrix including n x n pixels (where n = odd number of 3 and over) in association with the pixel of the font and the pixel of the background graphic image, and at the same time examines a color value of a pixel that overlaps with a center pixel of the outline display matrix.

According to an aspect of the invention, the pixels adjacent to the examined pixel are indicative of the pixel of the font or the pixel of the background graphic image, which overlaps with the remaining pixels other than the center pixel from among pixels of the outline display matrix.

In accordance with yet another aspect of the present invention, there is provided a method of forming a bitmap font outline of an Audio/Video (AV) system comprising: searching for a font corresponding to received text code data, and displaying the font on a background graphic image displayed on a display screen; examining whether color values of individual pixels contained in a predetermined area including the font are indicative of a font color value; and if the color value of the examined pixel is indicative of the font color value, converting a color value of the examined pixel, where the examined pixel is not contained in the font but is adjacent to a pixel contained in the font, into a predetermined outline color value, and displaying the converted result.

According to an aspect of the invention, the examining includes: virtually moving an outline display matrix including n x n pixels (where n = odd number of 3 and over) in the predetermined area; and examining a pixel of the predetermined area that overlaps with a center pixel of the outline display matrix.

According to an aspect of the invention, the pixels adjacent to the examined pixel are indicative of pixels of the predetermined area that overlaps with the remaining pixels other than the center pixel from among pixels of the outline display matrix.

According to an aspect of the invention, if the value of n is set to a different value, a thickness of the outline is changed to another value.

According to an aspect of the invention, the thickness of the outline is determined to be (n-1)/2 (where n = odd number of 3 and over).

According to an aspect of the invention, the method further comprises: adjusting the outline color value to change a color of the outline to another color.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 is a block diagram illustrating an AV system according to an embodiment of the present invention;
FIG. 2 is a detailed block diagram illustrating an OSD generator for use in an AV system according to the embodiment of the present invention shown in FIG. 1;
FIGs. 3A-3B show exemplary font data stored in a 1-bit font data pool according to an embodiment of the present invention;
FIG. 4A shows an outline display matrix for use in an operation of forming a bitmap font outline of the AV system according to an embodiment of the present invention;
FIG. 4B shows a process for scanning pixels of a test area using an outline display matrix during the operation of forming the bitmap font outline of the AV system according to a an embodiment of the present invention;
FIG. 4C shows a font outline formed by the operation of forming the bitmap font outline of the AV system according to an embodiment of the present invention;
FIG. 5 is a flow chart illustrating a method of forming a bitmap font outline of the AV system according to an embodiment of the present invention; and

FIG. 6 shows an exemplary OSD character displayed on a display connected to the AV system according to embodiments of the present invention.

DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

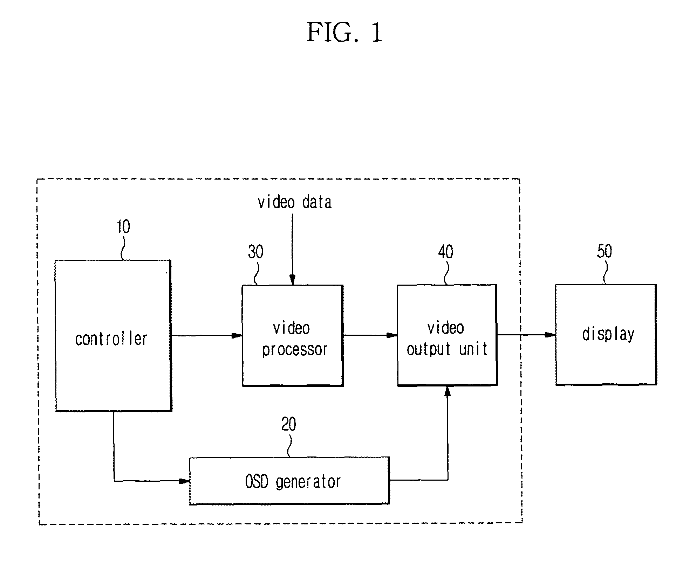

As shown in FIG. 1, an AV system according to an embodiment of the present invention includes an OSD generator 20 to form an OSD character to be displayed on the display 50; a video processor 30 to process input video data; a video output unit 40 to output a video signal, received from the video processor 30, to the display 50 connected to an external device; and a controller 10 to control overall operations of the AV system.

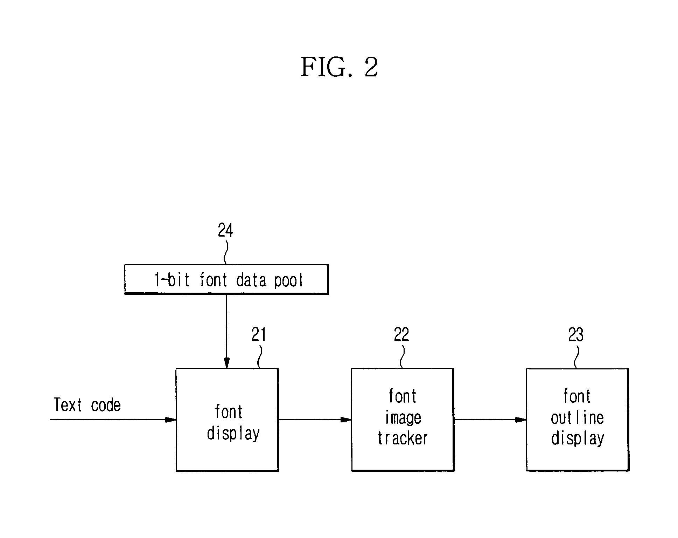

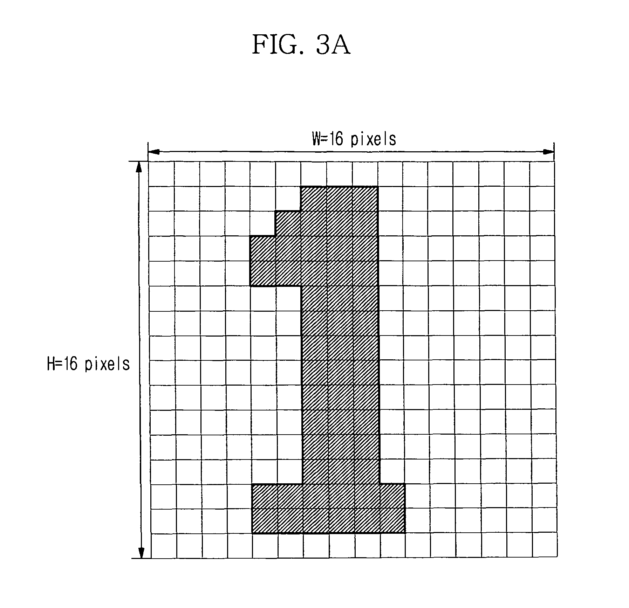

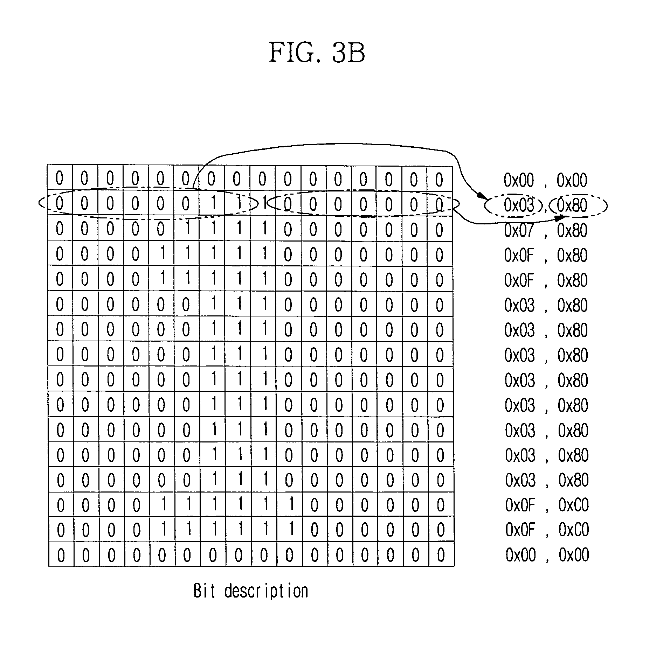

As shown in FIG. 2, the OSD generator 20 includes a 1-bit font data pool 24, a font display 21, a font image tracker 22, and a font image display 23. Font data is stored in the 1-bit font data pool. As shown in FIG. 3A, the font data allows each font to occupy 16 pixels (or 16 bits) in a horizontal direction and 16 pixels (or 16 bits) in a vertical direction per character. Bit values of individual pixels shown in FIG. 3A are denoted by a bit description as illustrated in FIG. 3B. Referring to the bit description of FIG. 3B, it may be recognized that the pixels in the area of a specific font "1" have a bit value of 1 ascribed to them, and the pixels in the remaining part have a bit value of 0, and so on.

As shown in FIG. 3B, when a font including individual bit values is stored in the 1-bit font data pool 24, the font is converted into hexadecimal font code data, such that the hexadecimal font code data is stored in the 1-bit font data pool 24. The font code data is a hexadecimal number, such that 16 horizontal pixels are divided into two groups of 8 horizontal pixels as shown in the right side of the bit description of FIG. 3B, a bit value of each of the 8 horizontal pixels is converted into a hexadecimal number, and the hexadecimal number is stored in the 1-bit font data pool 24. Although FIGs. 3A-3B show the bitmap font composed of 16 horizontal pixels and 16 vertical pixels, the implementation of the font is not limited to only 16 horizontal pixels and 16 vertical pixels, and may also be applicable in other examples. Further, it is understood that the font code data may be expressed using notations beside hexadecimal numbers.

The font display 21 searches for fonts that correspond to input text code data from the 1-bit font data pool 24, and displays the fonts on a background graphic image displayed on the display 50. In this case, a color of the displayed font may be determined by a user. For example, provided that a background graphic image displayed on the display is indicative of a bitmap graphic image having 256 colors, and the user sets a color value of the pixel having a bit value of 1 to 255 (i.e., white), the font is displayed in white.

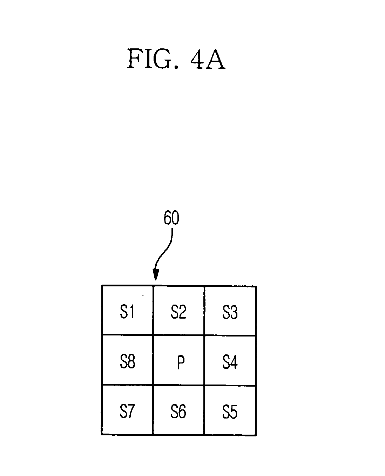

The font image tracker 22 controls the outline display matrix 60 of FIG. 4A to virtually move in an area where the font is displayed, and at the same time inspects the font and color values of pixels positioned in the vicinity of the font. In an embodiment of the invention, the area inspected by the outline display matrix 60 may be determined to be 16 horizontal pixels and 16 vertical pixels in association with individual fonts as shown in FIG. 3A, and the user may also determine other inspection areas as necessary.

The outline display matrix 60 includes 3 x 3 pixels according to an embodiment of the present invention, and the size of a matrix may also be set to other values as necessary. In this case, the matrix size determines a font outline thickness, and the matrix size and the font outline thickness may be represented by the following equation:

[Equation]

$$\text{matrix size} = n \times n \text{ (where } n = \text{odd number of 3 and over)}$$

$$n = 1 + \text{font outline thickness} \times 2$$

For example, if the outline matrix size is indicative of 3 x 3 pixels, the font outline thickness is designated as having a value of 1. In this case, the value of 1 is indicative of a horizontal or vertical length of one pixel.

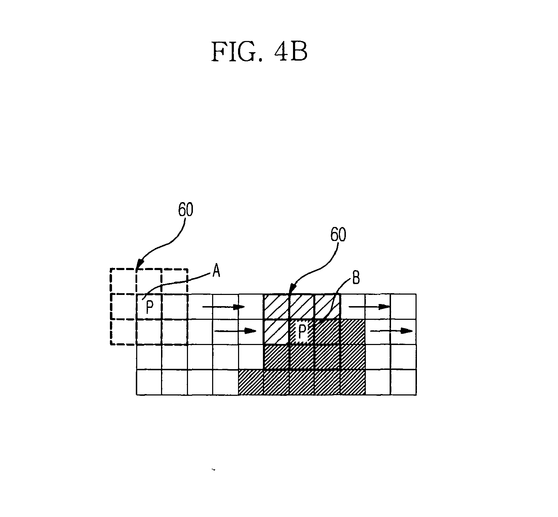

Also, the outline display matrix 60 is divided into a center pixel P and peripheral pixels S1-S8 that are positioned in the vicinity of the center pixel P. The font image tracker 22 virtually moves the outline display matrix 60 in the range from an upper left end to a lower right end of the font shown in FIG. 3A, and, at the same time, examines a color value of a pixel that overlaps with the center pixel P of the outline display matrix 60 from among pixels of the font and the background graphic image. In other words, the font image tracker 22 moves the outline display matrix 60 in a direction indicated by the arrows of FIG. 4B from a specific point "A" of FIG. 4B, and at the same time sequentially examines a color value of a pixel that overlaps with the center pixel P of the outline display matrix 60 from among the pixels shown in FIG. 4B.

The font image tracker 22 detects a color value of a pixel associated with a font and color values of pixels positioned in the vicinity of the font-associated pixel. In addition, the font image tracker 22 determines whether a corresponding pixel is indicative of a pixel contained in the font or other pixels of a background graphic image other than the font.

If a pixel that overlaps with the center pixel P of the outline display matrix 60 from among pixels that are contained in a test area of the outline display matrix 60 is indicative of a pixel of the font (i.e., if a color value of a corresponding pixel is indicative of a font color value), the font outline display 23 converts a color value of a pixel contained in the background graphic image from among the pixels that overlap with the peripheral pixels S1-S8 of the outline display matrix 60 into a predetermined outline color value. For example, if the outline display matrix 60 reaches a specific position "B" while examining color values of individual pixels shown in FIG. 4B, a pixel that overlaps with the center pixel P is indicative of a pixel of the font. As such, an operation of converting the color values of appropriate ones of the peripheral pixels S1-S8 into an outline color value may be performed.

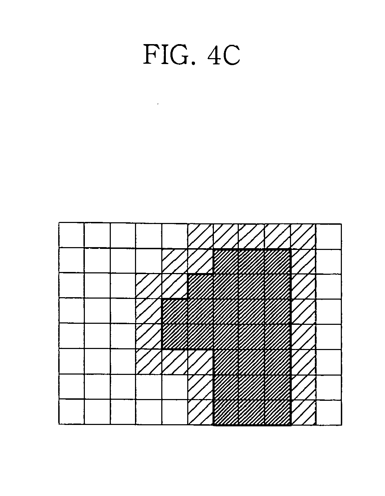

In order to convert the color values of the peripheral pixels S1-S8 into other values, the font outline display 23 sequentially examines color values of pixels positioned in a test area that overlaps with the peripheral pixels S1-S8. If the examined pixel is determined to not be equal to the pixel of the font, the font outline display 23 converts a color value of a corresponding pixel (i.e., pixels of a test area that overlap with the pixels S1, S2, S3, and S8 when the outline matrix is positioned at the position "B" of FIG. 4B) into a predetermined outline color value. This way, if color values of individual pixels positioned at the test area are examined, and the color value conversion is completed, an outline is formed at the font as shown in FIG. 4C. If the outline is completely formed, the OSD generator 20 transmits OSD data to the video output unit 40, such that the OSD data is displayed on the display 50.

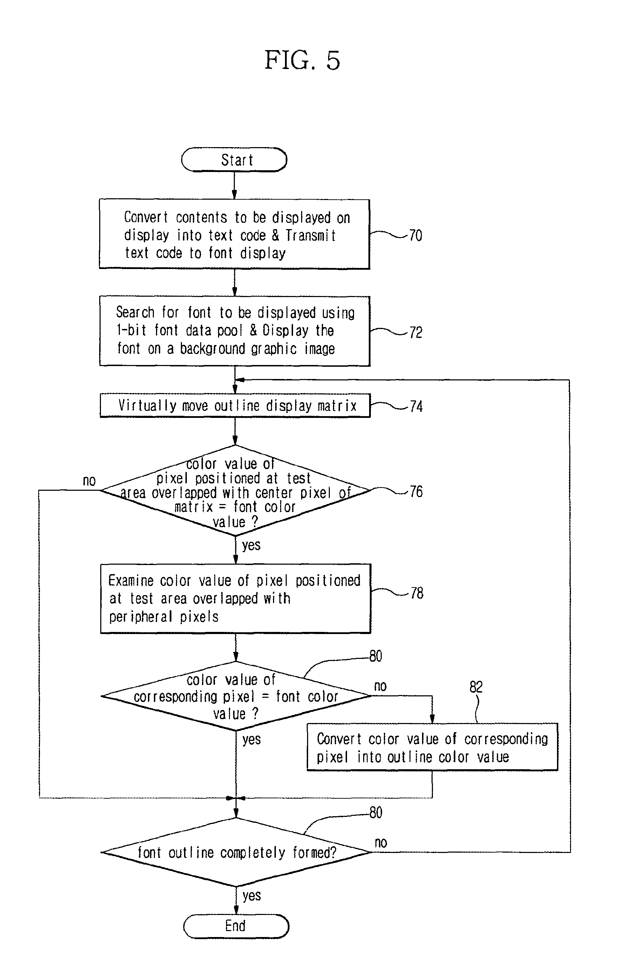

A method of forming a bitmap font outline of the AV system will hereinafter be described with reference to FIG. 5. Video data stored in a recording medium such as a DVD or HDD is read, is transmitted to the video processor 30 and the video output unit 40, and is then transmitted to the display 50 connected to the AV system.

When displaying the OSD character on a screen upon receiving a request from a user, the controller 10 converts contents to be displayed on the screen into a text code, and transmits the text code to the OSD generator 20 at operation 70. Here, the text code may use a variety of codes such as an ASCII code and a UNICODE, etc.

The font display 21 of the OSD generator 20 searches for a font indicated by the text code using the 1-bit font data pool 24, and controls the font to overlap a background graphic image generated from the display 50 at operation 72. In this case, the font color must be determined by the user, and various-colored fonts may be implemented according to a user setup command.

Thereafter, the font image tracker 22 virtually moves the n x n outline display matrix 60 (where n = an odd number of 3 and/or over) in a predetermined test area including the font at operation 74, and determines whether a color value of a pixel positioned at a test area that overlaps with the center pixel P of the outline display matrix 60 is indicative of a font color value at operation 76. If the color value of the pixel that overlaps with the center pixel P is not indicative of the font color value, whether the font outline is completely formed is determined at operation 84. Otherwise, if the color value of the pixel that overlaps with the center pixel P is indicative of the font color value, color values of pixels positioned at the test area that overlaps with the peripheral pixels S1-S8 of the outline display matrix 60 are examined at operation 78.

Whether the color value of the examined pixel is equal to the font color value is determined at operation 80. In this case, if the color value of a corresponding pixel is equal to the font color value, the above operation 80 is performed. Otherwise, if the color value of the corresponding pixel is not equal to the font color value, a color value of the corresponding pixel is converted into a predetermined outline color value at operation 82. For this purpose, the user must predetermine an outline color value. Thereafter, whether the font outline is completely formed is determined at operation 84. If outlines of all fonts are determined to have been completely formed at operation 84, all operations are terminated. Otherwise, if the outlines of all fonts are determined to have not been completely formed at operation 84, the process returns to operation 74.

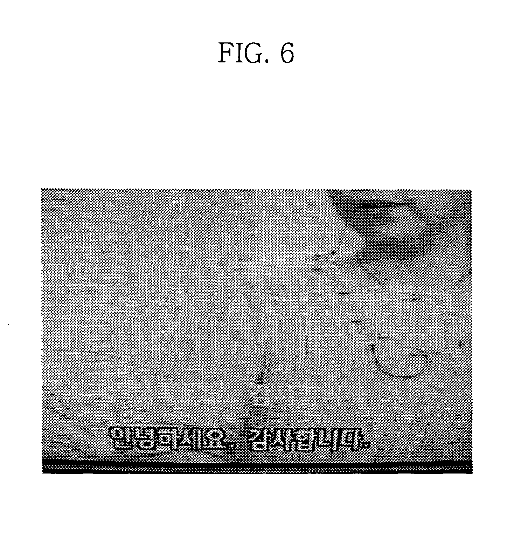

If the OSD character composed of the font where the outline is formed is displayed on the display 50, the user may more easily read the OSD character as may be seen from FIG. 6. FIG. 6 shows a first OSD character having the font outline and a second OSD character having no font outline. The first OSD character and the second OSD character are simultaneously displayed on a single screen. Referring to a lower end of FIG. 6, it may be recognized that the first OSD character "Hello! Thank you!" having the font outline is more clearly distinguished from a background graphic image than in the second OSD character "Hello! Thank you!" having no font outline.

Although the method of forming a bitmap font outline is applied to an AV system according to the above-mentioned embodiments of the present invention, it should be noted that the present invention may be applied not only to the AV system, but also to other systems (e.g., a Divx) capable of displaying such an OSD character using a bitmap font.

As is apparent from the above description, the AV system and the method of forming the bitmap font outline according to the present invention may display a font outline without changing general 1-bit font data, such that the present invention prevents an additional storage space from being required according to font data conversion.

The present invention adjusts the size of the outline display matrix required to form the font outline, to allow for the font outline to have different thicknesses. The present invention may also allow the font outline to have a variety of colors according to a user setup command, such that a user-desired color can be applied to the font outline.

Although a few embodiments of the present invention have been shown and described, it would be appreciated by those skilled in the art that changes may be made in these embodiments without departing from the principles and spirit of the invention, the scope of which is defined in the claims and their equivalents.

**Claims**

1. A system comprising:

    a font display to analyze received text code data, to search for a font corresponding to the text code data, and to display the font on a background graphic image displayed on a display screen;
    a font image tracker to examine whether color values of individual pixels contained in a predetermined area of the display screen, including the font, are indicative of a font color value; and
    a font outline display to convert a color value of a pixel, which is not found to be contained in the font but which is adjacent to a pixel found in the font, into a predetermined outline color value when the color value of the pixel not in the font is indicative of the font color value, and to display the converted result.

2. The system according to claim 1, wherein the font image tracker virtually moves an outline display matrix including n x n pixels (where n = odd number of 3 and over) in the predetermined area, and at the same time examines a color value of a pixel that overlaps with a center pixel of the outline display matrix.

3. The system according to claim 2, wherein the pixels adjacent to the examined pixel are indicative of pixels of the predetermined area that overlap with the remaining pixels other than the center pixel from among pixels of the outline display matrix.

4. The system according to claim 3, wherein the font outline display recognizes color values of the pixels of the predetermined area that overlap with the remaining pixels, and converts a color value of a corresponding pixel into the outline color value when a pixel having no font color value is detected from among the pixels.

5. The system according to claim 2, wherein the font image tracker moves the outline display matrix when the color value of the examined pixel is not equal to the font color value, and examines the next pixel.

6. A system comprising:

    a font display to analyze received text code data, to search for a font corresponding to the text code data, and to display the font on a background graphic image displayed on a display screen;
    a font image tracker to examine a color value of a pixel of the font and a color value of a pixel of a background graphic image, and to determine whether a pixel acting as an examined object constructs the font or the background graphic image; and
    a font outline display to convert a color value of the pixel, where the pixel is not found to be contained in the font but which is adjacent to a pixel found in the font, into a predetermined outline color value when the color value of the pixel not in the font is indicative of the font color value, and to display the converted result..

7. The system according to claim 6, wherein the font image tracker virtually moves an outline display matrix including n x n pixels (where n = odd number of 3 and over) in association with the pixel of the font and the pixel of the background graphic image, and at the same time examines a color value of a pixel that overlaps with a center pixel of the outline display matrix.

8. The system according to claim 6, wherein the pixels adjacent to the examined pixel are indicative of the pixel of the font or the pixel of the background graphic image, which overlap with the remaining pixels other than the center pixel from among pixels of the outline display matrix.

9. A method of forming a bitmap font outline, comprising:

searching for a font corresponding to received text code data, and displaying the font on a background graphic image displayed on a display screen;

examining whether color values of individual pixels contained in a predetermined area including the font are indicative of a font color value; and

if the color value of the examined pixel is indicative of the font color value, converting a color value of the examined pixel, where the examined pixel is not contained in the font but is adjacent to a pixel contained in the font, into a predetermined outline color value, and displaying the converted result.

10. The method according to claim 9, wherein the examining includes:

virtually moving an outline display matrix including n x n pixels (where n = odd number of 3 and over) in the predetermined area; and

examining a pixel of the predetermined area that overlaps with a center pixel of the outline display matrix.

11. The method according to claim 10, wherein the pixels adjacent to the examined pixel are indicative of pixels of the predetermined area that overlap with the remaining pixels other than the center pixel from among pixels of the outline display matrix.

12. The method according to claim 10, wherein:

if the value of n is set to a different value, a thickness of the outline is changed to another value.

13. The method according to claim 12, wherein the thickness of the outline is determined to be (n-1)/2 (where n = odd number of 3 and over).

14. The method according to claim 9, further comprising:

adjusting the outline color value to change a color of the outline to another color.

15. An On Screen Display (OSD) generator to form an OSD character to be displayed on a display, the OSD generator comprising:

a font data pool to store font data;

a font display to search for a font that corresponds to input text code data from the font data pool and to display the font on a background graphic image displayed on the display;

a font image tracker to virtually move an outline display matrix in an area where the font is displayed, and to inspect color values of the font and color values of pixels positioned in the vicinity of the font; and

a font outline display to display the font and an outline of the font if the color values of the font are found to be similar to those of the pixels positioned in the vicinity of the font.

16. The OSD generator according to claim 15, wherein the OSD generator is to be used with an audio/visual (AV) system, comprising:

a video processor to process input video data;

a video output unit to output a video signal received from the video processor to the display; and

a controller to control overall operations of the AV system.

17. The OSD generator according to claim 15, wherein the font data pool comprises a 1-bit font data pool.

18. The OSD generator according to claim 15, wherein the font data allows each font to occupy 16 pixels in a horizontal direction and 16 pixels in a vertical direction per font character.

19. The OSD generator according to claim 15, wherein the outline display matrix comprises a 3 x 3 pixel matrix.

20. The OSD generator according to claim 15, wherein a size of the outline display matrix determines a thickness of the outline.

21. The OSD generator according to claim 19, wherein the font image tracker virtually moves the outline display matrix across the area where the font is displayed and examines the color value of each pixel that overlaps with a pixel at a center of the outline display matrix.

22. The OSD generator according to claim 21, wherein the font image tracker detects the color value of a pixel associated with the font and color values of pixels positioned in the vicinity of the font-associated pixel and determines whether each pixel is indicative of a pixel contained in the font or pixels of a background graphic image.

23. The OSD generator according to claim 22, wherein, if a pixel that overlaps with the center pixel of the outline display matrix is indicative of a pixel contained in the font, the font outline display converts color values of pixels contained in the background graphic image that overlap with peripheral pixels of the outline display matrix into a predetermined outline color values.

24. The OSD generator according to claim 23, wherein the font outline display sequentially examines color values of pixels positioned in a test area that overlaps with the peripheral pixels and, if the examined pixel is determined to not be equal to the pixel of the font, converts color values of each of the pixels positioned in the test area that overlaps with the peripheral pixels into a predetermined outline color value.

25. The OSD generator according to claim 15, wherein an operation of a conversion of the stored font data is not required to display the font outline.

# FIG. 1

FIG. 2

```
                        24
                        ⌇
            ┌─────────────────────────┐
            │    1-bit font data pool  │
            └─────────────────────────┘
                        │
                        │         21
                        │         ⌇
                        ▼                        22                      23
            ┌──────────────┐         ⌇          ┌──────────────┐        ⌇          ┌──────────────┐
Text code   │              │         ⌇          │     font     │        ⌇          │     font     │
──────────▶ │     font     │────────────────▶   │    image     │ ─────────────▶    │   outline    │
            │   display    │                     │   tracker    │                   │   display    │
            │              │                     │              │                   │              │
            └──────────────┘                     └──────────────┘                   └──────────────┘
```

FIG. 3A

# FIG. 3B

| | | | | | | | | | | | | | | | | | |
|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0x00 , 0x00 |
| 0 | 0 | 0 | 0 | 0 | 0 | 1 | 1 | 0 | 0 | 0 | 0 | 0 | 0 | 0 | 0 | 0x03 , 0x80 |
| 0 | 0 | 0 | 0 | 0 | 1 | 1 | 1 | 1 | 0 | 0 | 0 | 0 | 0 | 0 | 0 | 0x07 , 0x80 |
| 0 | 0 | 0 | 0 | 1 | 1 | 1 | 1 | 1 | 0 | 0 | 0 | 0 | 0 | 0 | 0 | 0x0F , 0x80 |
| 0 | 0 | 0 | 0 | 1 | 1 | 1 | 1 | 1 | 0 | 0 | 0 | 0 | 0 | 0 | 0 | 0x0F , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 0 | 0 | 1 | 1 | 1 | 0 | 0 | 0 | 0 | 0 | 0 | 0 | 0x03 , 0x80 |
| 0 | 0 | 0 | 0 | 1 | 1 | 1 | 1 | 1 | 1 | 0 | 0 | 0 | 0 | 0 | 0 | 0x0F , 0xC0 |
| 0 | 0 | 0 | 0 | 1 | 1 | 1 | 1 | 1 | 1 | 0 | 0 | 0 | 0 | 0 | 0 | 0x0F , 0xC0 |
| 0 | 0 | 0 | 0 | 0 | 0 | 0 | 0 | 0 | 0 | 0 | 0 | 0 | 0 | 0 | 0 | 0x00 , 0x00 |

Bit description

FIG. 4A

60

| S1 | S2 | S3 |
|----|----|----|
| S8 | P  | S4 |
| S7 | S6 | S5 |

# FIG. 4B

FIG. 4C

## FIG. 5

```
                    ( Start )
                        │
                        ▼
        ┌──────────────────────────────────┐
        │ Convert contents to be displayed on│
        │ display into text code & Transmit  │──── 70
        │ text code to font display          │
        └──────────────────────────────────┘
                        │
                        ▼
        ┌──────────────────────────────────┐
        │ Search for font to be displayed using│
        │ 1-bit font data pool & Display the  │──── 72
        │ font on a background graphic image  │
        └──────────────────────────────────┘
                        │
                        ▼
        ┌──────────────────────────────────┐
        │  Virtually move outline display matrix │──── 74
        └──────────────────────────────────┘
                        │
                        ▼
                    ╱ color value of ╲
            no    ╱ pixel positioned at test ╲
        ◄────────◄ area overlapped with center pixel of ►──── 76
                  ╲ matrix = font color ╱
                   ╲      value ? ╱
                        │ yes
                        ▼
        ┌──────────────────────────────────┐
        │ Examine color value of pixel positioned│
        │ at test area overlapped with        │──── 78
        │ peripheral pixels                   │
        └──────────────────────────────────┘
                        │
                        ▼
                                    ── 80
                  ╱ color value of ╲       no                82
                ╱ corresponding pixel = font color ╲────────────┐
                ╲         value ?      ╱                         │
                   ╲                ╱                            ▼
                        │ yes                    ┌──────────────────────────────┐
                        │                        │ Convert color value of corresponding│
                        │                        │ pixel into outline color value │
                        │                        └──────────────────────────────┘
                        ▼
                                        ── 80
                  ╱                          ╲    no
                ╱  font outline completely formed? ╲────────────►
                ╲                              ╱
                        │ yes
                        ▼
                    ( End )
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 199835081